(19) Europäisches Patentamt
European Patent Office
Office européen des brevets

(11) EP 0 698 467 B1

(12) **EUROPEAN PATENT SPECIFICATION**

(45) Date of publication and mention
of the grant of the patent:
**20.11.2002 Bulletin 2002/47**

(51) Int Cl.[7]: **B29C 45/76**, G06F 17/50

(21) Application number: **95305376.6**

(22) Date of filing: **01.08.1995**

(54) **an apparatus and method for optimising the conditions of a process of fluid flow and a method of producing an injection molded product**

Vorrichtung und Verfahren zur Optimierung des Fliessverhaltens eines Fluids und Methode zur Herstellung eines Spritzgussteiles

appareil et méthode pour optimiser l'écoulement d'un fluide et procédé de moulage par injection

(84) Designated Contracting States:
**DE FR GB**

(30) Priority: **01.08.1994 JP 18009494**

(43) Date of publication of application:
**28.02.1996 Bulletin 1996/09**

(73) Proprietor: **TORAY INDUSTRIES, INC.**
**Tokyo 103-8666 (JP)**

(72) Inventor: **Nakano, Ryo , c/o Shiga Plant**
**Ohtsu City, Shiga Pref. (JP)**

(74) Representative: **Calderbank, Thomas Roger et al**
**MEWBURN ELLIS**
**York House**
**23 Kingsway**
**London WC2B 6HP (GB)**

(56) References cited:
**EP-A- 0 525 198**   **DE-A- 3 743 351**
**DE-A- 3 830 571**   **DE-A- 3 839 907**
**JP-A- 6 122 068**   **US-A- 4 534 003**

- **REVUE GENERALE DES CAOUTCHOUCS ET PLASTIQUES, vol. 71, no. 734, 1 September 1994 page 37/38, 40, 42 XP 000465010 TERRISSE J 'LES ATOUTS DE LA BUSE RHEOMETRIQUE EAHP'**
- **PATENT ABSTRACTS OF JAPAN vol. 17 no. 123 (M-1380) ,15 March 1993 & JP-A-04 305424 (DAINIPPON PRINTING CO LTD)**
- **PATENT ABSTRACTS OF JAPAN vol. 17 no. 172 (M-1392) ,2 April 1993 & JP-A-04 331125 (SEKISUI CHEM CO LTD)**
- **PATENT ABSTRACTS OF JAPAN vol. 95 no. 5 & JP-A-07 125034 (TORAY IND INC) 16 May 1995,**

## Description

The present invention relates to an apparatus and method for optimising a process of fluid flow by finding the pressures or pressure transitions or flow velocities of the fluid in the process of fluid flow, and a method for producing an injection molded product by determining the molding conditions using said method for optimising a process of fluid flow.

In general, methods for analyzing processes of fluid flow such as injection molding processes by reproducing the injection molding processes, etc. using computer simulation are widely practically used. The following description is mainly concerned with the methods for analyzing injection molding processes as typical methods for analyzing processes of fluid flow.

These injection molding process analyzing methods contribute to achieving higher quality, higher efficiencies and lower costs in the product development of injection molded products, etc. For example, these methods are disclosed in Japanese Patent Laid-Open Nos. 91-224712, 92-152120, 92-305424, 92-331125, etc. These injection molding process analyzing methods use two-dimensional models for finding the pressures, temperatures, shear stresses, etc. at respective portions. Further 2-dimensional analysis methods are shown in "Finite difference solution of field problems" by S. Güçeri in "Fundamentals of computer modelling for polymer processing", Oxford University Press (1989); "Numerical techniques for free and moving boundary problems", by H.P. Wang and H.S.Lee, in the same volume; and in "A finite-element/finite difference simulation of the injection molding filling process", J. Non-Newtonian Fluid mechanics, 7 (1980).

In these injection molding process analyzing methods, since a two-dimensional model is used as the model of an injection molded product, the respective portions of the injection molded product are divided into many two-dimensional small elements such as triangles and rectangles, and the pressures, temperatures, shear stresses, etc. at the respective small elements- are found by a numerical analysis technique using a computer.

Since mold cavities are in fact 3-dimensional, approximations must be made to form a two-dimensional model. One technique for constructing a two-dimensional model (for example used in the article by S. Güçeri cited above) is to introduce a parameter called "fluidity". Calling the 2-dimensions of the model x and y, fluidity represents the width of the cavity in the third dimension.

In the injection molding process analyzing methods, when the shape of an injection molded product can be approximated by combining two-dimensional figures, for example, when the thickness of the injection molded product is thin for the entire size of the injection molded product, the results obtained by analysis can be highly accurate.

However, when the molded product is more than 5 mm in thickness or generally small such as a connector, the conventional analysis methods do not allow highly accurate analysis since the three-dimensional flow such as flow in the thickness direction becomes very influential. Moreover, even when the molded product is thin, the conventional methods of using plane elements give little useful information in the accurate analysis of local flow condition as in a step shape portion or corner shape portion of the product.

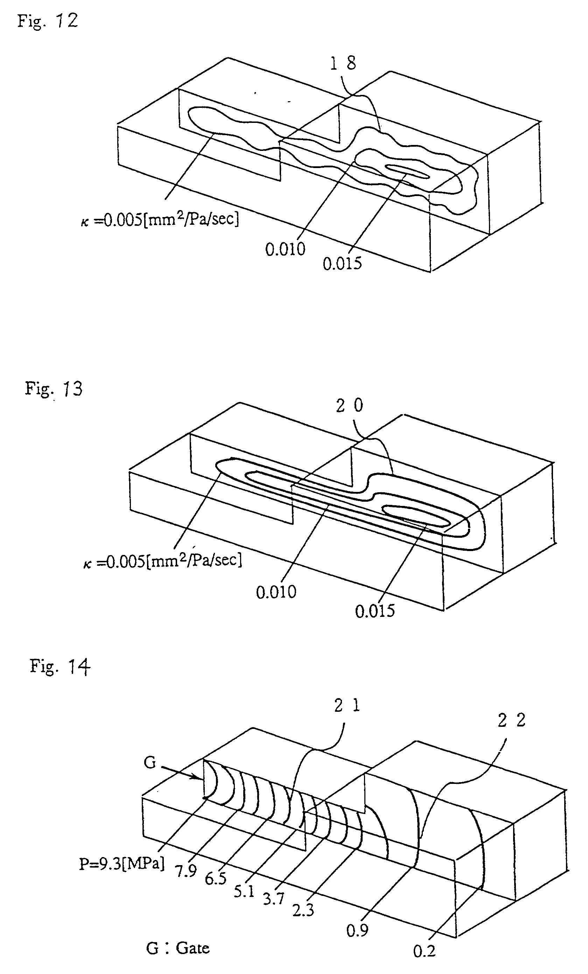

For example, when the molded product is T-shaped, the conventional injection molding process analyzing methods cannot accurately express the form of the intersection since a two-dimensional model as shown in Fig. 13 is used.

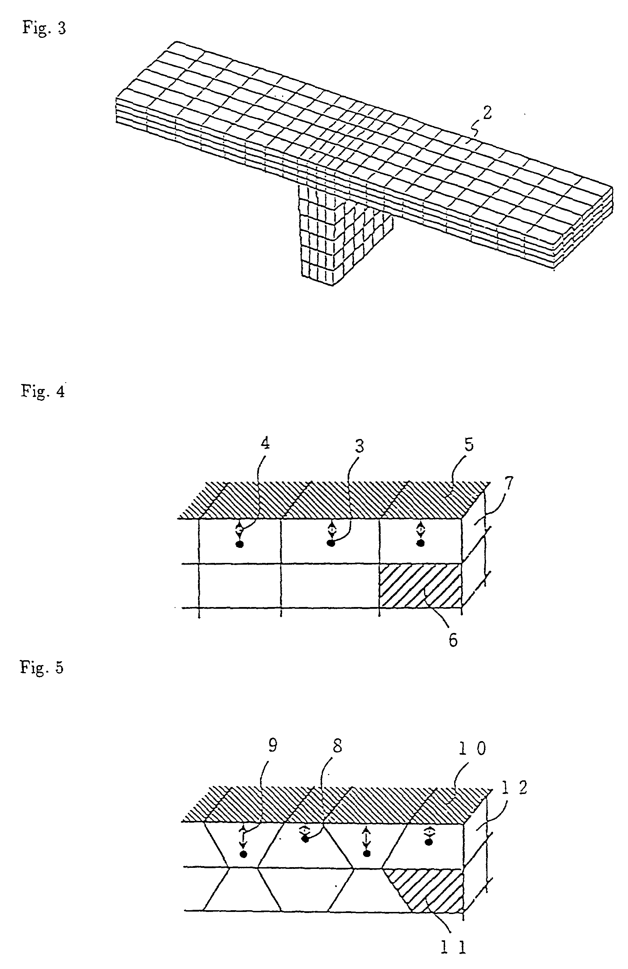

So, it can be considered to analyze using a three-dimensional model as shown in Fig. 3 by a general method of computational fluid analysis such as the finite element method or finite difference method. In this case, the model to be analyzed is divided into three-dimensional small elements such as hexahedrons, triangular pyramids and triangular poles. If such a model is used for analysis by a general method of computational fluid analysis, an actual shape can be accurately modeled, to allow analysis at higher accuracy. One such method appears to be employed in US-A-5097431, although the numerical analysis is not disclosed in detail.

However, the application of such a general method of three-dimensional analysis requires a large volume of computation, to take a very long computing time unpractically. The reasons are as follows. The flow in an injection molding process is a moving boundary problem in which the filled region expands with the lapse of time. Furthermore, in general, the material to be injection-molded is a non-Newtonian fluid, the viscosity of which for having a flow property changes depending on the temperature and shear rate, and the temperature which decides the viscosity also changes every moment with the lapse of time. Thus, the three-dimensional analysis of complicated flow requires enormous computing time and memory requirement. So, it has been practically difficult to achieve higher efficiency or cost reduction by such a simulation instead of the trial manufacture by an actual machine.

Therefore, when an injection molded product is produced based on the molding conditions of the injection molded product found by any conventional injection molding process analyzing method and apparatus as mentioned above, either or both of the problems occur, that the injection molded product cannot be produced under preferable conditions because of unsatisfactory analysis accuracy and that the productivity is very low.

The injection molded product obtained under this manufacturing process has problems in view of strength, etc. since it cannot be produced under optimum conditions.

In view of the above problems, a first object of the present invention is to present an apparatus and method for optimising the conditions of a process of fluid flow which accurately reproduces the shape of the flow channel of the fluid using a three-dimensional model and performs precise analysis within a practical computing time.

A second object of the present invention is to present a method for efficiently producing an injection molded product of high quality by determining such molding conditions as product shape, mold design and material selection by using said method for optimising the conditions of a process of fluid flow.

The present invention presents an apparatus for optimising the conditions of a process of fluid flow comprising:

a three-dimensional model constructing means for constructing a three-dimensional model divided into a plurality of small elements to represent at least part of a cavity where fluid flows;

a flow conductance determining means for determining a flow conductance $\kappa$ of the fluid for each small element, $\kappa$ being defined by the equations

$U = -\kappa(\partial P/\partial x)$, $V = -\kappa(\partial P/\partial y)$, $W = -\kappa(\partial P/\partial z)$ where U, V and W are the velocities at the respective positions x, y and z of the small element, and $\kappa$ also being determined by a pre-determined equation in terms of the viscosity of the fluid and the position of the small element in the cavity, $\kappa$ being a small value if the small element is located close to the cavity wall surface, and being a larger value when the small element is located further from the cavity wall surface; and

computing means for determining, based on said flow conductance $\kappa$,

(a) the pressure of the fluid at said respective small elements;
(b) the pressure transitions of the fluid at said respective small elements; or
(c) the flow velocity of the fluid at said respective small elements.

The present invention also presents a method of optimising the conditions of a process of fluid flow comprising:

constructing a three-dimensional mode! divided into a plurality of small elements to represent at least part of a cavity where fluid flows;

determining a flow conductance $\kappa$ of the fluid for each small element, $\kappa$ being defined by the equations

$U = -\kappa(\partial P/\partial x)$, $V = -\kappa(\partial P/\partial y)$, $W = -\kappa(\partial P/\partial z)$ where U, V and W are the velocities at the respective positions x, y and z of the small element, and $\kappa$ also being determined by a pre-determined equation in terms of the viscosity of the fluid and the position of the small element in the cavity, $\kappa$ being a small value if the small element is located close to the cavity wall surface, and being a larger value when the small element is located further from the cavity wall surface; and

determining, based on said flow conductance $\kappa$,

(a) the pressure of the fluid at said respective small elements;
(b) the pressure transitions of the fluid at said respective small elements; or
(c) the flow velocity of the fluid at said respective small elements.

In a preferred embodiment of said method for optimising the conditions of a process of fluid flow of the present invention, the flow conductance $\kappa$ at each of said small elements is determined by a function $F(R, \eta)$ which increases according to the increase of the minimum distance $R$ between the small element and the cavity wall surface, and decreases according to the increase of the viscosity $\eta$ of said fluid.

In another preferred embodiment of said method for optimising the conditions of a process of fluid flow of the present invention, the flow conductance $\kappa$ at each of said small elements is determined by solving the following equation;

$$\frac{\partial^2 \kappa}{\partial x^2} + \frac{\partial^2 \kappa}{\partial y^2} + \frac{\partial^2 \kappa}{\partial z^2} = \frac{1}{\eta}$$

The present invention also presents a method for producing an injection molded product comprising:

determining the molding conditions of an injection molded product; and
constructing a three-dimensional model divided into a plurality of small elements to represent at least part of a cavity for forming the injection molded product;

determining a flow conductance $\kappa$ of the fluid for each small element, $\kappa$ being defined by the equations

$U = -\kappa(\partial P/\partial x)$, $V = -\kappa(\partial P/\partial y)$, $W = -\kappa(\partial P/\partial z)$ where U, V and W are the velocities at the respective positions x, y and z of the small element, and $\kappa$ also being determined by a pre-determined equation in terms of the viscosity of the fluid and the position of the small element in the cavity, $\kappa$ being a small value if the small element is located close to the cavity wall surface, and being a larger value when the small element is located further from the cavity wall surface

determining, based on said flow conductance $\kappa$,

(a) the pressure of the fluid at said respective small elements;
(b) the pressure transitions of the fluid at said respective small elements; or
(c) the flow velocity of the fluid at said respective small elements;

deciding molding conditions based on the results of said determination; and
producing the injection molded product based on said decided molding conditions.

The molding conditions may include any one of the shape of said injection molded product, mold configuration, injection speed, mold temperature and injection molded material.

**Brief Description of the Drawings**

Fig. 1 is a diagram showing an example of the hardware configuration of the apparatus for analysing a process of fluid flow (injection molding process) of the present invention.

Fig. 2 is a flow chart showing an example of the procedure in the injection molding process analyzing method and the injection molded product producing method of the present invention.

Fig. 3 is a drawing showing an example of a three-dimensional model divided into small elements used in the present invention.

Fig. 4 is a conceptual view showing an example of a method for determining the flow conductances used in the present invention.

Fig. 5 is a conceptual view showing an example of a method for determining the flow conductances used in the present invention.

Fig. 6 is a drawing showing how the small elements of an object are decided as an example of the present invention.

Fig. 7 is a drawing showing the results of computing the distribution of flow conductances $\kappa$ at a cross section of an injection molded product in an example of the present invention.

Fig. 8 is a contour line diagram showing the results of analyzing the pressure distribution inside an injection molded product based on the distribution of flow conductances $\kappa$ of Fig. 7.

Fig. 9 is a contour line diagram showing the results of analyzing the distribution of pressure transitions inside an injection molded product based on the distribution of flow conductances $\kappa$ of Fig. 7,

Fig. 10 is a diagram showing the results of analyzing the distribution of flow velocities of a material inside an injection molded product based on the distribution of flow conductances $\kappa$ of Fig. 7.

Fig. 11 shows how small elements of an object are decided as an example of the present invention.

Fig. 12 is a drawing showing the results of computation to illustrate the distribution of flow conductances $\kappa$ at a cross section of an injection molded product as an example of the present invention.

Fig. 13 is a drawing showing the results of computation to illustrate the distribution of flow conductances $\kappa$ at a cross section of an injection molded product as an example of the present invention.

Fig. 14 is a contour line diagram showing the results of analysing the pressure distribution inside an injection moulded product based on the distribution of flow conductances $\kappa$ of Fig. 13;

Fig. 15 is a contour line diagram showing the results of analysing the distribution of pressure transitions inside an injection moulded product based on the distribution of flow conductances $\kappa$ of Fig. 13;

Fig. 16 is a diagram showing the results of analysing the distribution of flow velocities of a material inside an injection moulded product based on the distribution of flow conductances $\kappa$ of Fig. 13;

Fig. 17 is a drawing showing a two-dimensional moulded divided into small elements used in the conventional analysis of injection moulding process;

Fig. 18 is a flow chart illustrating an example of a procedure according to the invention for analysing the injection moulding process;

Fig 19 is a detailed flow chart to explain step 3 in the process of Fig 18;

Fig 20 shows the shape of the mould used in a fourth example of the invention;

Fig. 21 shows the flow conductance derived in the fourth example;

Fig. 22 shows the position of the flow front at various instants in the fourth example;

Fig. 23 shows the pressure and temperature of the injected plastic at two instants during the fourth example;

Fig. 24 illustrates the fibre orientation analysis in the fourth example;
Fig. 25 illustrates Young's modulus results derived from the fourth example;
Fig. 26 illustrates the density of the plastic 5 and 25 seconds after the filling of the mould in the fourth example;
Fig. 27 illustrates deformation of the moulded item of the fourth example;
Fig. 28 illustrates the variation of this deformation with distance from the injection point; and
Fig. 29 illustrates a fifth example of a method according to the invention.

Preferred embodiments of the injection moulding process analysing apparatus and method as an example of the apparatus and method for analysing a process of fluid flow of the present invention are described below in detail in reference to drawings. A preferable embodiment of the injection moulded product producing method is also described below.

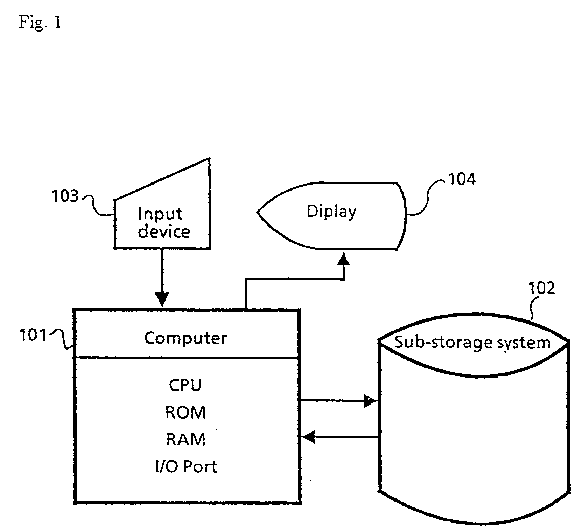

Fig. 1 is a diagram showing an example of the hardware configuration of the injection moulding process analysing apparatus of the present invention. A computer 101 is connected with an input device 103, a display 104 and sub-storage system 102. The input device 103 receives, for example, the data of the injection moulding conditions of the injection moulded product to be analysed and of the three-dimensional model. The data are stored in the sub-storage system 102. The operator instructs the computer 101 to read the data into the RAM (random access memory) contained in it and to analyse. The results obtained by analysis are displayed, for example, by the display 104. As needed, the operator can modify the injection moulding conditions and re-analyse. The analysed results can also be outputted into a printer provided separately or stored in the sub-storage system 102. In this case, the outputted results can also be used, for example, as input data of another analyser.

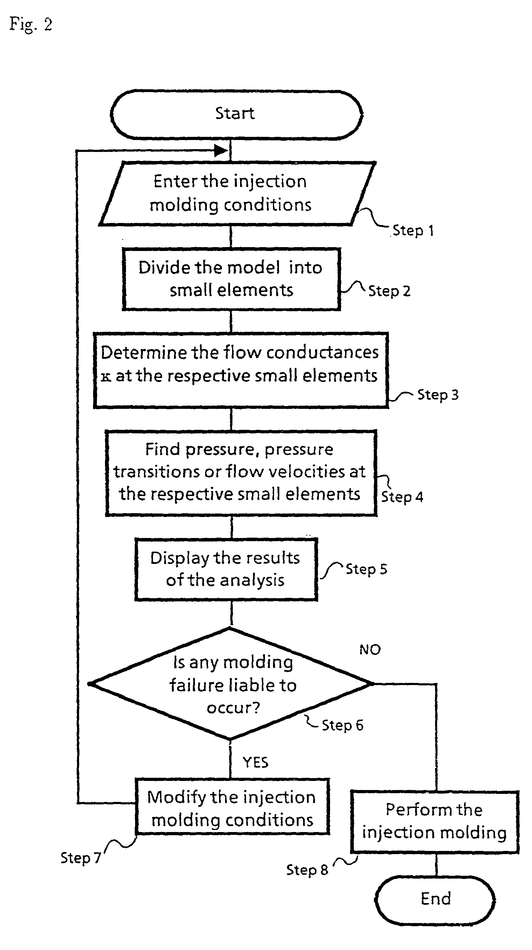

Fig. 2 is a flow chart showing an example of the procedure in the injection moulding process analysing apparatus and method of the present invention and in the injection moulded product producing method using said apparatus.

In the analysis of injection moulding process, at first, the injection moulding conditions of the injection moulded product (such as the shape of the injection moulded product, mould configuration, injection speed, injection temperature, mould temperature and injection moulded material) are entered (Step 1). Then, the shape is three-dimensionally divided into small elements to construct a three-dimensional model of the product, for example, as shown in Fig. 3 (Step 2). In succession the flow conductances $\kappa$ at the respective small elements are determined (Step 3). Subsequently, the pressures of the material to be injection-moulded (hereinafter called "material pressures") at the respective small elements are found using the flow conductances $\kappa$ at the respective small elements determined in Step 3 (Step 4). In this case, the pressure transitions at the respective small elements may also be found instead. As a further other method, the flow velocities of the material to be injection-molded at the respective small elements may also be found from the found distribution of material pressures or directly. The results thus obtained by analysis are, for example, graphically processed, to be expressed as contour lines or as a graph (Step 5). The results can also be outputted onto a printer, etc. as described above.

When an injection molded product is produced using the analyzed results of injection molded process, the pressures, pressure transitions or flow velocities obtained as above are evaluated (Step 6). This evaluation is performed, for example, by judging that a molding failure is highly liable to occur when there is any region with an abnormal pressure, pressure transition or fluid velocity. If any molding failure is predicted from the results obtained by analysis, the injection molding conditions are modified (Step 7), and analysis is carried out again from Step 1. These steps are repeated, and when the results assure a prediction that good injection molding can be achieved, the injection molding is carried out according to the injection molding conditions, to produce the intended injection molded product (Step 8).

The methods for finding the material pressures, pressure transitions and flow velocities at the respective small elements are described below in detail.

To find the material pressures in injection molding, the generally known continuity equation (1) is used. The equation expresses that the sum of the incoming flow into a given region in the fluid and the outgoing flow from the region is zero, and holds when the fluid is assumed to be incompressible. When the fluid is compressible, the right hand side does not become zero, though the following discussion similarly holds;

$$\frac{\partial U}{\partial x} + \frac{\partial V}{\partial y} + \frac{\partial W}{\partial z} = 0, \tag{1}$$

where $x$, $y$ and $z$ are three-dimensional coordinates of space, and $U$, $V$ and $W$ are the flow velocities of the material to be injection-molded in the directions of the respective coordinate axes. This equation (1) is an equation with $U$, $V$ and $W$ as unknown variables, and in general, it is said necessary to solve a momentum equation with this equation and the shear stress derived from pressure $P$ and flow velocity as unknown variables. So, when three-dimensional flow is handled, there are four unknown variables.

The inventors found that the computing time can be greatly reduced by using the following equations (2) for solving the equation (1), to eliminate the flow velocities $U, V$ and $W$ in the respective directions from the equation (1), thereby decreasing the number of unknown variables from four to one only of pressure. In this case, the computing time in the use of a three-dimensional model can be decreased to about 1/16 and the required RAM volume of the computer, to about 1/4. Thus, for the first time, the analysis of a three-dimensional injection molding process at a practical speed and accuracy can be achieved;

$$U = -\kappa\frac{\partial P}{\partial x}, \ V = -\kappa\frac{\partial P}{\partial y}, \ W = -\kappa\frac{\partial P}{\partial z}. \qquad (2)$$

In the above equations (2), $\kappa$ is a flow conductance. The equations (2) are called Darcy's flow equations, which express porous flow. That is, it is assumed that the flow velocities $U, V$ and $W$ in the respective directions of three-dimensional coordinate axes $x, y$ and $z$ are proportional to the pressure gradients, etc. in the respective directions.
Substitution of the equations (2) into the equation (1) gives the following equation (3);

$$\kappa \left( \frac{\partial^2 P}{\partial x^2} + \frac{\partial^2 P}{\partial y^2} + \frac{\partial^2 P}{\partial z^2} \right) = 0. \qquad (3)$$

The equation (3) is the same in form as a general equation expressing thermal conduction. In a thermal conduction problem, for a given region which is divided into small elements, the temperature distribution in the region can be obtained by such a numerical analysis method such as the finite element method, finite difference method or control volume method by presetting the temperature $T$ or temperature gradient at the boundary as a boundary condition. Therefore, if the pressure $P$ or pressure gradient of the boundary is set as a boundary condition for a given region which is divided into small elements, the equation (3) can be similarly solved by using an analysis method or analysis program for thermal conduction problems, and the pressure distribution of a material can be obtained.
For the setting of boundary condition, for example, the pressure gradient value obtained from the injection pressure values or injection flow rates is set at the material inflow portion, then the pressure gradient zero is set at the boundary in contact with the mold surface since neither inflow nor outflow occurs, atmospheric pressure being set as the pressure of the flow front portion with free surface.
Furthermore, since the material filled region increases with the lapse of time in injection molding, the pressure distribution also changes with the lapse of time. Such temporal change of pressure distribution (distribution of pressure transitions) can be obtained by solving the equation (3) again by finding the shape of the filled region varied according to the overall quantity of the newly filled material. The varied shape of the filled region can be found by the control volume method or FAN(Flow Analysis Network) method, etc. used in the conventional injection molding process analyzing methods.
The flow velocity can be simply obtained, for example, by obtaining the pressure distribution $P$ as described above and substituting it into the equation (1).
An actual injection molded product may have a region as thin as allowing to disregard the thickness-oriented flow of the material to be injection-molded. Such a region may be analyzed two-dimensionally using a two-dimensional model and using the following equations (4) instead of the equations (2). This can further raise the overall computational speed;

$$U = -\kappa\frac{\partial P}{\partial x}, \ V = -\kappa\frac{\partial P}{\partial y}, \ \kappa = \frac{H^2}{12\eta}, \qquad (4)$$

where $H$ is the thickness of the material flow channel, and $\eta$ is the viscosity.
The method for determining the flow conductances $\kappa$ in Step 3 of Fig. 2 is described below in detail.
For a portion in which the injection molding process is analyzed using a two-dimensional model, the flow conductance can be singly determined from the flow channel shape and the viscosity as shown in the equations (4), and the use of the value is preferable.
In the analysis using a three-dimensional model, $\kappa$ can be preferably determined, for example, by the following method found by the inventor.
The inventor found that the flowability of the material to he injection-molded becomes higher according to the increase of distance from the mold surface and lower according to the decrease of distance. Therefore, generally it is preferable to determine the flow conductance as a small value when the small element concerned is located close to the mold surface and as a large value when far away. Therefore, the assumption that the flow conductance $\kappa$ changes according to a function showing such a tendency gives a good approximation in the results of the analysis. That is, it is preferable to use the following equation (5) as the flow conductance $\kappa$ in such a case;

$$\kappa = F(R,\eta), \tag{5}$$

where $R$ is the minimum distance from the center of gravity of the element concerned to the mold surface or the minimum distance from the apex of the element concerned to the mold surface, and $\eta$ is the viscosity.

The function $F$ of the equation (5) increases the flow conductance $\kappa$ according to the increase of distance from the mold surface, i.e., the increase of $R$ since the effect of friction force between materials is lower, and decreases the flow conductance $\kappa$ according to the increase of viscosity $\eta$ since the flowability is lower. It is defined as a function to increase $\kappa$ according to the increase of $R$ and decreases $\kappa$ according to the increase of $\eta$, for example, like $\kappa = aR/\eta + b$. In this case, $a$ is a positive proportional coefficient, and $b$ is a coefficient showing the flow conductance at $R = 0$, that is, at the mold surface. These constants $a$ and $b$ are determined, for example, by experimenting typical injection molded products, etc. The linear equation concerning $R/\eta$ stated here has a feature that the computation is completed in a short time, as the simplest mode to express function $F$. Depending on the type of injection molded product, another equation which gives analyzed results well agreeing with the actual results of molding can also be used.

Furthermore the viscosity $\eta$ depends on the temperature, shear rate, etc., and can be expressed by an approximation as shown in the equation (6). In the equation, $A$, $B$ and $C$ are coefficients peculiar to the material and can be experimentally obtained by a viscosity measuring instrument. If the approximate value of viscosity obtained by the equation (6) is substituted into the equation (5), the effect of the change of viscosity caused by the changes of shear rate and temperature can be simply incorporated into the computation of flow conductance;

$$\eta = A \times (\text{Shear rate})^{B} \times \exp(C \times \text{temperature}). \tag{6}$$

The flow conductance $\kappa$ can also be obtained as described below.

The inventor found a method for obtaining the flow conductance $\kappa$ by solving the differential equation shown in the equation (7), where $x$, $y$ and $z$ are the three-dimensional coordinate axes of space, and $\eta$ is the viscosity;

$$\frac{\partial^2 \kappa}{\partial x^2} + \frac{\partial^2 \kappa}{\partial y^2} + \frac{\partial^2 \kappa}{\partial z^2} = -\frac{1}{\eta}. \tag{7}$$

The inventor found that the equation (7) can be obtained by substituting the first equation of the equations (2) into the equation (8) expressing the force balance in a flow field dominated by viscous force, to eliminate the flow velocity $U$, and neglecting the 2nd order derivative terms concerning the $x$, $y$ and $z$ of pressure $P$. The neglect of the 2nd order derivative terms allows $\kappa$ to be obtained by the following simple method;

$$\eta \left( \frac{\partial^2 U}{\partial x^2} + \frac{\partial^2 U}{\partial y^2} + \frac{\partial^2 U}{\partial z^2} \right) = \frac{\partial P}{\partial x}. \tag{8}$$

The equation (7) is the same in form as a general equation expressing thermal conduction. It is known that in a thermal conduction problem, if the temperature T or temperature gradient of the boundary is preset as a boundary condition for a region with a given shape, the temperature distribution in the region can be obtained by such a numerical analysis method as the finite element method, boundary element method, finite difference method or control volume method, etc. Therefore, if the equation (7) is solved by setting a boundary condition that $\kappa$ at the mold surface as the boundary is zero, a distribution of $\kappa$ smaller at a position closer to the mold surface and larger at a position far away can be obtained using any analysis method or analysis program for solving thermal conduction problems. The boundary condition of $\kappa = 0$ corresponds to the assumption that the speed at the mold surface is zero, as can be seen from the equation (1). The slip at the mold surface can also be considered if a small value such as $\kappa = 0.01\text{mm}^2/(\text{Pa·sec})$ is used instead of zero.

If the approximate value of the viscosity by the equation (6) is substituted into the equation (7), the effect of the change of the viscosity caused by the changes of shear rate and temperature can also be simply incorporated into the computation of flow conductance.

This method allows the flow conductance to be obtained accurately for a given shape though a longer computing time is taken for the necessity of solving the thermal conduction equation, compared to the method of determining the flow conductance $\kappa$ using the above equation (5). Furthermore, since the equation (7) is derived based on the equation (8) which is an equation to express the force balance in a flow field dominated by the viscous force as described above, the value obtained is more highly physically consistent than that obtained by the method of using the equation (5). Therefore, always highly accurate results of analysis can be obtained irrespective of the shape of the injection molded product, the model divided into small elements, etc.

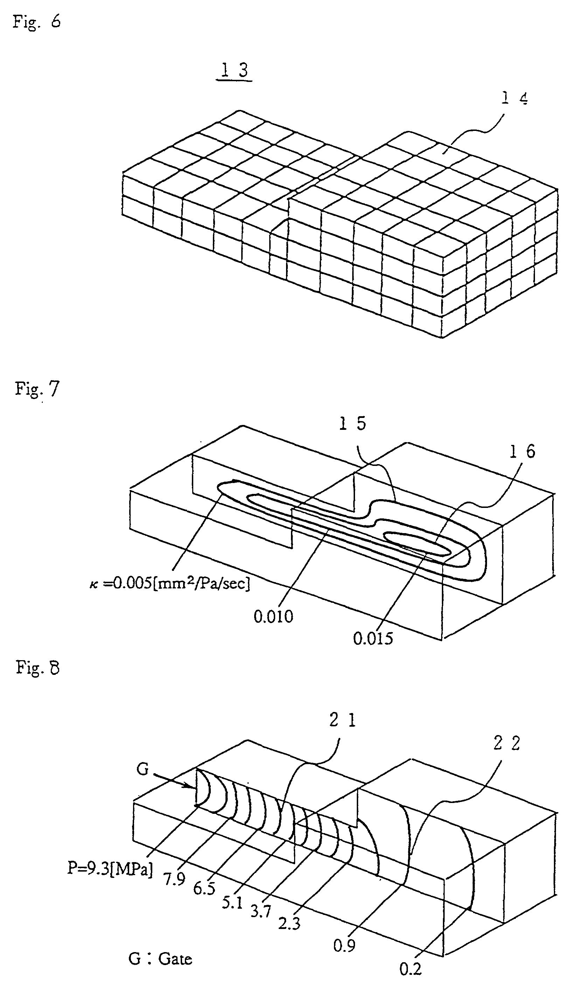

For example, let us consider cases where small elements with sectional shapes as shown in Figs. 4 and 5 are used. The flow conductance determining method using the equation (5) allows the flow conductances to be accurately and quickly determined when the small elements are divided regularly as shown in Fig. 4, but if the small elements are irregularly formed as shown in Fig. 5, since the centers of gravity of the adjacent elements cannot be constant in reference to the mold surface, the flow conductances obtained may be inaccurate.

In general, the division into small elements used for numerical analysis can be automatically performed by a program called a pre-processor, and especially a complicatedly shaped product with many protrusions and holes can also be easily divided. The automatic division generally makes the small elements shaped irregularly, but the method using the equation (7) can minimize the effect of the shapes of small elements and allows highly accurate analysis even if applied to a complicatedly shaped injection molded product.

In addition to the above, there are various other methods for determining the flow conductances, and especially in the case of special shapes, any method for achieving high computational accuracy and computational speed can be considered.

The following describes the method for producing an injection molded product by analyzing the injection molding process by the above mentioned method and deciding the injection molding conditions based on the analyzed results.

The distribution of material pressures, pressure transitions or the flow velocities of the material to be injection-molded in the case where an injection molded product is produced under the injection molding conditions given can be obtained as described above. In this case, the results can be used for modifying and deciding the injection molding conditions as described below.

In general, to obtain a less strained molded product at low stresses in injection molding, the material pressures should be desirably as low as possible, and the pressure gradient should also be preferably as uniform as possible without any extremely sharp portion and without any extremely gentle portion. Also in the temporal change of pressure, the occurrence of peak pressure due to sharp pressure rise is not preferable. If such pressure criteria are applied, the acceptability of the molding state can be judged. Furthermore, it is preferable to apply criteria based on the flow velocities obtained as described above.

The molded state can also be judged based on the flow velocity gradient, shear rates and stresses, or the filling pattern, etc. These data can be simply obtained by processing the information on the pressure distribution, pressure transition distribution or flow velocity distribution obtained by the corresponding method described above. For example, the shear rate can be defined as the speed gradient among the small elements, and the shear stress can be obtained by multiplying the shear rate by the viscosity of the material, and the filling pattern in the filling region can be analyzed by sequentially deciding the region filled next in reference to the speed of the flow front.

When any failure is expected by the above judging method, a flaw-less injection molded product can be produced by correcting the mold design, product design, molding conditions or material used, according to the methods described below.

The first correction method is to correct the mold configuration, for modifying the material flow channel, etc. The mold configuration in this case means the material flow channel from the injection nozzle of the material to the product shape portion which are generally called the spur, runner and gate. For example, if the pressure loss is judged to be too large since the flow length from the nozzle to the end of cavity is too long, the flow length can be shortened by branching the runner for allowing the material to flow through plural gates into the product shape portion.

The second correction method is to correct the shape of the injection molded product for modifying the material flow channel. For example, if the pressure gradient at the product shape portion is so large as to threaten large straining, the product can be increased in thickness to lessen the pressure gradient.

The third correction method is to modify such a molding condition as the injection speed, material temperature or mold temperature. For example, if the pressure rises heavily at the material inlet at a certain time threatening difficult molding, the pressure rise can be lowered by lowering the injection speed at that time or raising the material temperature and/or mold temperature.

The fourth correction method is to change the material to be injection-molded. For example, if the material pressure loss is so large as to threaten difficult molding, the adoption of any highly flowable material low in viscosity can lower the pressure loss.

The above correction methods can be adopted individually or as a combination. Moreover, it is preferable to use an expert system, etc. for automatically performing the above correction.

The injection molding conditions are re-examined as described above, and analysis is performed again using the above mentioned injection molding process analyzing apparatus under the conditions conjectured to give preferable injection molding results, to repeat this analysis till the injection molding conditions to obtain the optimum results can be found. If the injection molding conditions to obtain the optimum results are found, the injection molding is performed under the conditions, to produce the intended injection molded product.

The present invention can be applied, in principle, to all the shapes of injection molded products, but is especially effective for products liable to suffer the three-dimensional shape effects.

Products liable to suffer the three-dimensional shape effects are thick parts of more than 5 mm in thickness, or small parts of about 10 mm in the dimension the largest portion even with thin thickness of about 1 to 2 mm in which the effect of flow in the thickness direction is relatively liable to occur. Furthermore, three-dimensional analysis is effective also for the local flow of a region where the flow suddenly changes in thickness direction such as a step shape portion or corner shape portion.

The injection molding process analyzing method of the present invention can also be used in combination with any of the conventional two-dimensional methods, and for a portion unaffected by three-dimensional flow, the conventional two-dimensional elements can be used to achieve higher efficiency of analysis.

In the present invention, the mold used can be a metallic mold machined by any precise machining method such as electric discharge machining of metal.

The apparatus and method for analyzing a process of fluid flow of the present invention can be preferably used for analyzing not only an injection molding process but also a general process of fluid flow. For example, the present invention is suitable for analyzing a flow process accompanying three-dimensional material flow such as the material flow in the extrusion die of extrusion molding, the flow in the screw channel of an extruder or the flow in a kneading machine.

Thus, the present invention can be applied to obtain the pressure distribution, pressure transition distribution or material flow velocity distribution during the flow in the extrusion die for round bar or flat plate extrusion molding or profile extrusion molding. Since the quality of the molded product may be lowered due to material retention and thermal degradation in a portion where the pressure gradient or flow velocity is close to zero, the extrusion molding conditions such as die shape must be determined not to generate any retaining portion. The present invention is also suitable for such applications.

The present invention can also be applied to decide the conditions of design for lessening the retaining portions in the screw of an injection molding machine or extrusion molding machine. Furthermore, the present invention can also be applied to the computation of the shear stress distribution in the screw channel of an extruder type kneading machine in a design to maximize the shear stress value.

**Examples**

The fluid flow process analyzing apparatus and method of the present invention are described below in detail with the injection molding process analyzing apparatus and method and the injection molded product producing method as examples in reference to the drawings. Fig. 2 is a flow chart showing the procedure in the method of the present invention.

Example 1

This example is concerned with a molded product with a step portion changing from 5 mm to 10 mm in thickness as shown in Fig. 6.

At first, in step 1 of Fig. 2, the injection moulding conditions were entered, namely, nylon resin as the material to be used, 280°C as the injection temperature, 80°C as the mould temperature and 1 second as the fill time. Assuming that the volume of the mould is known, it is possible to use the fill time as a condition for the calculation simply by setting the flow rate of material into the mould to be the value for which the mould is filled up during the fill time.

Then, in Step 2, the shape of the injection moulded product was divided into a plurality of three-dimensional small elements 14 so that a three-dimensional model of the product was constructed as shown in Fig. 6. In this example, the product was divided into regular lattice three-dimensional small elements shaped by hexahedrons with eight apexes for each.

In succession in Step 3 of Fig. 2, flow conductances $\kappa$ were obtained from the equation (5) ($\kappa=aR/\eta+b$, a = 0.4mm, b=0.0mm/(Pa.sec), $\eta$=100Pa.sec). In the equation (5), the distance between the mould and the centre of gravity of each element is represented by R. Since in the first example the fill time is short, the viscosity is assumed to be constant. In other words, the decrease in temperature of the plastics material and the increase of viscosity are assumed to be small. The assumption that viscosity is constant is also justified in this case because in this example the shape of the mould has a much more significant effect on κ than variations in η.

Fig. 7 shows the distribution of the flow conductances κ in a section obtained based on the equation 5 using the small element moulded of Fig. 6 by contour lines. As can be seen from Fig. 7 at a portion 15 close to the mould surface, the flow conductance is close to zero, and on the other hand at a portion 16 close to the centre of the thickness, the flow conductance is 0.02mm/(Pa.sec), showing high flowability. It can be seen that the K distribution obtained is smooth.

Subsequently, in Step 4 of Fig. 2, the pressure distribution of the respective small elements during injection moulding was obtained by solving the equation (3) based on the κ distribution of Fig. 7 using a numerical calculation program similar to that for analysing thermal conduction. The calculation of pressure is performed at each of a number of successive instance separated by short time intervals. The first is the instant when the plastics material is first injected at the material inlet. The position of the flow front at the next instant is obtained using the flow rate at the flow front, and the pressure distribution at the second instant is then calculated. Thus the whole filling process is performed by repeating the calculation until the mould is filled. At each instant the distribution of pressure is calculated from κ, using as boundary conditions a constant value of flow rate at the material inlet, atmospheric pressure at the flow front, and κ=0 at the wall of the mould. The assumption that κ=0 means that the flow rate of the material is zero at the wall of the mould, or in other words there is no slip on the wall of the mould.

Since a constant value of viscosity is assumed, no boundary condition for temperature is required. However, if desired the temperature distribution can be calculated, assuming constant temperature at the wall of the mould and the value for the thermal conduction coefficient. In Step 5, the results for pressure were graphically processed, to obtain a pressure distribution as shown in Fig. 8. Fig. 8 illustrates the pressure distribution at the moment when the plastic fully fills the mould. The pressure range of the pressure distribution was 0.1 to 10 MPa. This diagram shows the pressure of the respective small elements by contour lines. The series of computation starting from Step 2 was completed in a very short time of about 90 seconds using an engineering work station.

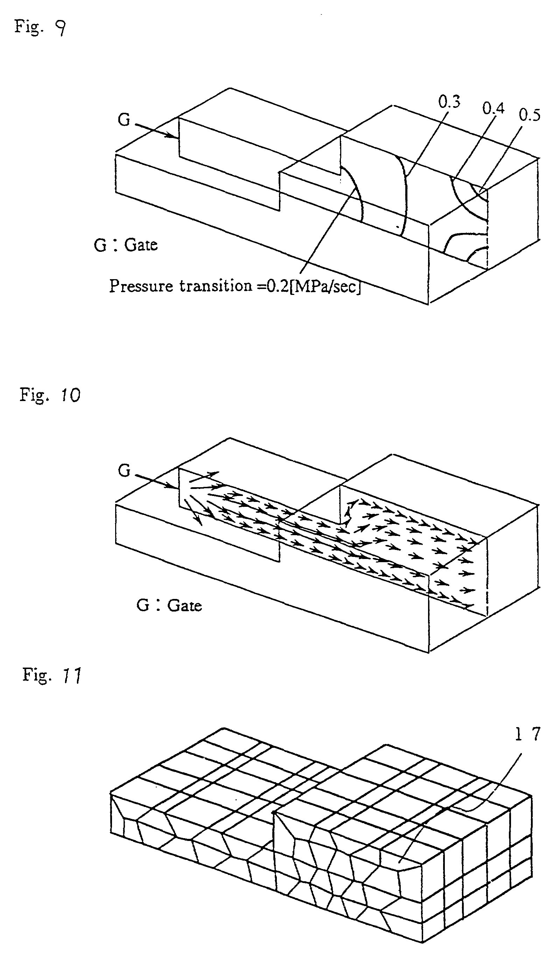

Based on the pressure distribution obtained, the pressure transition distribution (Fig. 9) and the flow velocity distribution (Fig. 10) were obtained. Furthermore, the shear stress distribution, etc. were also obtained. According to these results obtained by analysis, the flow velocities are 30 to 100 mm/sec, and the shear stresses are 1000 Pa and less. Since it was judged that there was no particular problem for injection moulding, the injection moulded product was produced. The produced injection moulded product was excellent in such properties as strength since it was produced under optimum conditions.

If any moulding failure is likely to occur due to the occurrence of an extreme pressure gradient portion, and so on, the shape of the moulded product, the moulding conditions, the material, etc. can be changed, to repeat the same procedure from Step 1, for obtaining adequate product design, mould design, moulding conditions, etc.

Example 2

For the same injection moulded product as that of Example 1, the distribution of flow conductances κ was obtained based on the equation (5) under the same conditions as above except that a model of irregularly divided small elements as shown in Fig. 11 was used. As a result, the flow conductance κ changed irregularly near the mould boundary as shown in Fig. 12. It can be seen that this result cannot be physically explained, and is a computation error. The reason is surmised to be that the distances between the centres of gravity of adjacent elements and the mould surface, which should be essentially almost the same, are not the same being affected by the small element division method.

In this case, it may be difficult to obtain accurate results by analysis. However, the model of irregularly divided small elements as described above can be automatically simply generated from the shape of an injection moulded product, and obtaining the flow conductances κ based on the equation (5) is high in computational speed. So, the analysis as above can be effectively used for determining approximate conditions in the beginning to decide the injection moulding conditions.

Example 3

For the same injection moulded product as that of Examples 1 and 2, the small element model shown in Fig. 11 as that of Example 2 was used to obtain the distribution of flow conductances κ based on the equation (7), and the distribution was used to analyse the injection moulding process under the same conditions as in the above examples.

Fig. 13 shows the distribution of the flow conductances κ in a section obtained based on the equation (7) using the small element model of Fig. 11, as contour lines. Though the computing time was slightly longer, the κ distribution (distribution range: 0 to 0.02mm$^2$/Pa/sec)) obtained was smooth like that of Fig. 7.

In succession in Step 4 of Fig. 2, based on the κ distribution obtained in Fig. 13, the distribution of pressures of the respective small elements during injection moulding was obtained as a 0.1 to 10 Mpa pressure distribution as shown in Fig. 14 at the moment when plastic fills the mould. Also in this case, the pressures of the respective small elements are expressed as contour lines. The pressure distribution obtained was almost the same as that shown in Fig. 8. The series of computation starting from Step 2 was completed in a rather longer time of about 160 seconds using the same engineering work station as above. If any conventional general numerical calculation method is used to obtain the pressure distribution for the same object, for example, it takes about 2500 seconds.

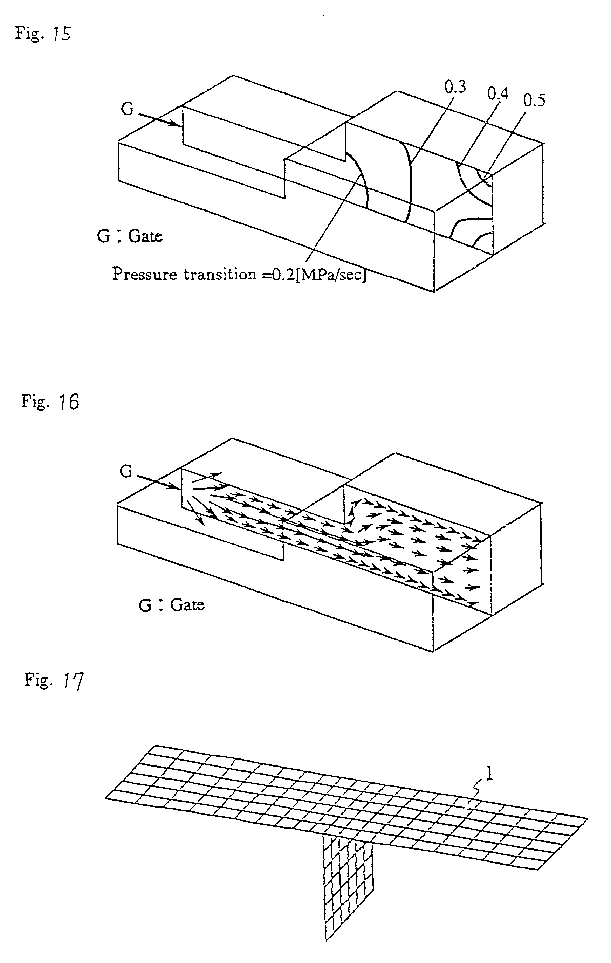

Based on the pressure distribution obtained, the pressure transition distribution (Fig. 15) and the flow velocity distribution (Fig, 16) were obtained. Furthermore, the shear stress distribution, etc. were also obtained. These results were also almost the same as those in Example 1. From these results obtained by analysis, it was judged that there was no particular problem for injection moulding. So. the injection moulded product was produced. Since the injection moulded product was produced under the optimum conditions similar to those of Example 1, the product was excellent in such properties as strength.

As in the case of Example 1, if a moulding failure is likely to occur due to the occurrence of an extreme gradient portion, and so on, the shape of the moulded product, the moulding conditions, the materials, etc. can be changed to repeat the same procedure from Step 1, for obtaining the appropriate product design, mould design, moulding conditions, etc.

### Example 4

(i) The Analysis Procedure

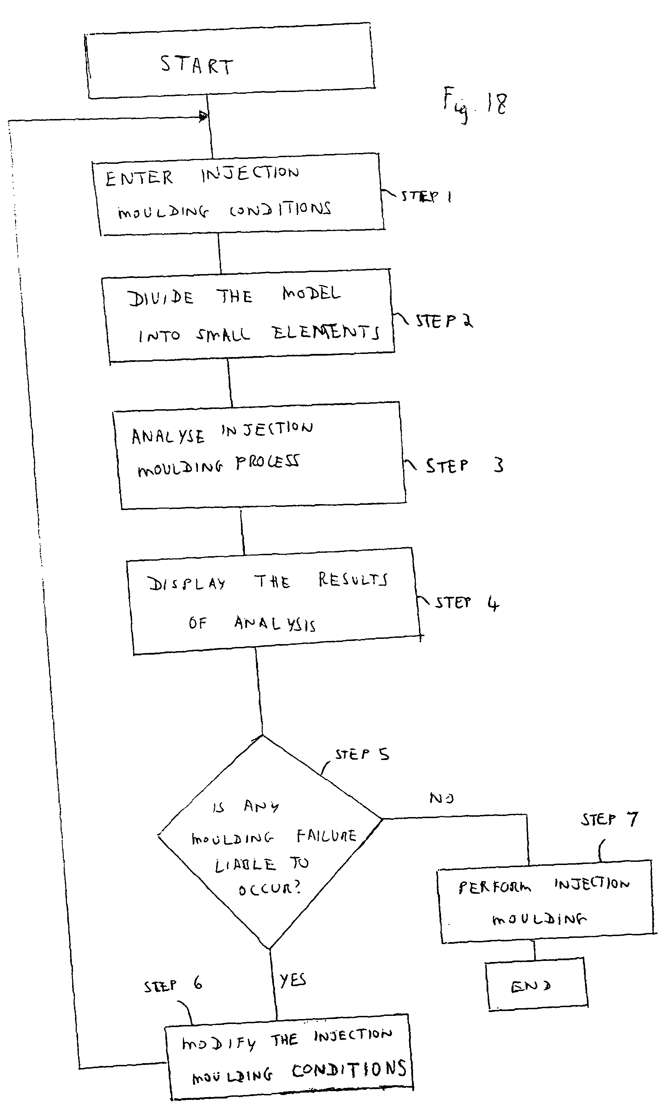

Figure 18 is a flow diagram illustrating a second procedure according to the invention.

In step 1, the conditions for the moulding are entered. These may include the shape of the mould, the temperature of the mould, the position at which plastic is injected, the temperature and the velocity and pressure of the plastic at the injection point and numerical parameters characterizing the plastic material, including constants A, B and C in equation (6).

In step 2, the mould of the model is divided into small elements.

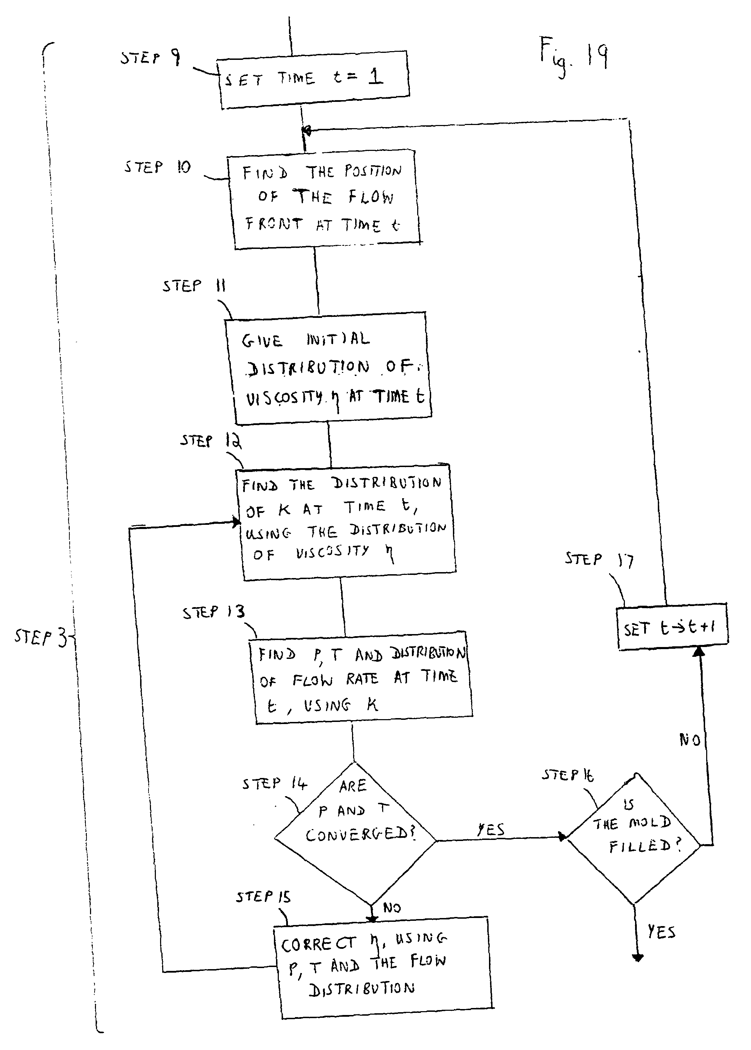

In step 3, which is explained in more detail with reference to Figure 19 below, the injection moulding process is analysed.

In step 4, the results of the analysis, for example, the pressure and velocity of the plastic at every moment during the moulding process are displayed. In step 5 a decision is made, using the results, as to whether a moulding failure is liable to occur. If it is, then in step 6 the injection moulding conditions are modified, and steps 1, 2, 3, 4 and 5 are repeated. If in step 5 it is found that no moulding failure is liable to occur, then injection moulding can be performed (step 7).

In Figure 19, step 3 of the process is illustrated in more detail. The plastic injection process is analysed at each of a number of moments, the moments being regularly spaced with short intervals between them.

The first moment (time t=1) is just after the injection of plastic into the mould. No assumption is made for the Value of $\kappa$. In step 10 it is assumed that the plastic is filed from the material inlet and the flow front is the apex of the element adjoining the material inlet.

In step 11 the value of $\eta$ in the filled element is taken to have a predetermined constant value. In step 12, using the value of $\eta$ and a boundary condition of $\kappa=0$ (an assumption of non-slip on the wall of the mould), the value of $\kappa$ in each small element is obtained. In step 13, using the value of $\kappa$, the pressure P of each small element is obtained using the boundary condition of the pressure at the flow front is atmospheric pressure (0.1MPa), as well as the injection pressure or the flow rate of plastic at the injection point. Temperature T at each small element is calculated using equation (9).

$$\rho \, Cp \, \frac{\partial T}{\partial t} = \kappa \, \frac{\partial^2 T}{\partial x_j \partial x_j} + \eta \, \dot{\gamma}^2 \qquad (9)$$

Where $\gamma$ is the shear rate.

In step 14, the convergence of P and T is judged. In other words, a judgement is made about whether the values of P and T at time t=1 have been correctly ascertained. If at step 14 the 'NO' option is taken, then in step 15 $\eta$ for each small element is recalculated using equation (6) and the present values of P, T and flow rate. Then step 13 is repeated to find more accuarate values for P and T at time t=1.

If at step 14 the 'YES' option is taken, the values T, P, flow rate and viscosity at time t=1 are stored. Subsequently, step 16 is taken. At time t=1 the mould contains very little plastic, so at step 16 the 'NO' option is taken, so that in step 17 analysis moves on to time t=2. Step 10 is then repeated for this second time instant, to find the next position of the flow front using equation (2) and the values for $\kappa$ and P at time t=1.

In step 11 the values of η are recalculated. For those elements which were filled at time t=1 the value of η is assumed to be unchanged, while for those elements first filled at time t=2, η is assumed to take the predetermined value. In step 12, the value of κ is calculated, at time t=2, using the values for η at time t=2, by either equation (5) or equation (7). In step 13, P and T are derived at time t=2 for each small element which is filled using the values for κ at time t=2. If it is decided at Step 14 that correct values for P and T have not yet been reached, then in Step 15 η is the filled elements is recalculated using the latest values for P and T. As at time t=1, the successive recalculation of η and P and T is repeated until P and T have converged to constant values, at which point in Step 14 the "YES" option is taken.

The steps 10-17 are then repeated for time t=3, and so on until all of the elements of the mould have been filled. At this point, the answer 'YES' is obtained at step 16, and the procedure now goes onto step 4 of Fig. 18.

A number of the variations of this procedure are possible. In particular, it is possible to assume that the viscosity n is constant throughout the filling procedure, in which case κ is constant throughout the filling procedure, and need only to be calculated once. It is also possible to vary slightly the boundary conditions which are assumed, for example those which are assumed at the first instant t=1. All such variations will not be considered further in example 4.

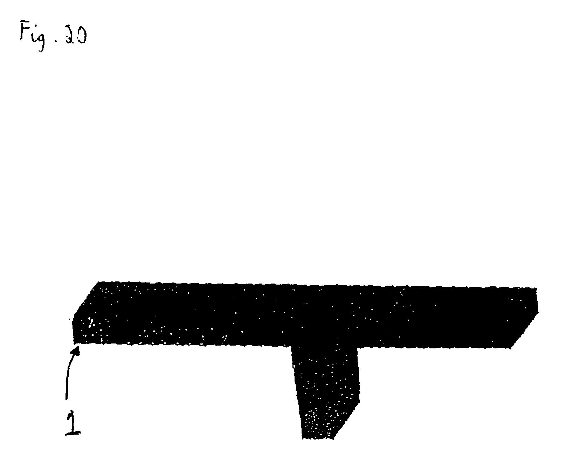

Figure 20 illustrates a three dimensional T-shaped mould which will be used in this example. The process illustrated by Figure 18 is applied to analysing the injection of plastic into this mould from a corner portion 1.

(ii) Results

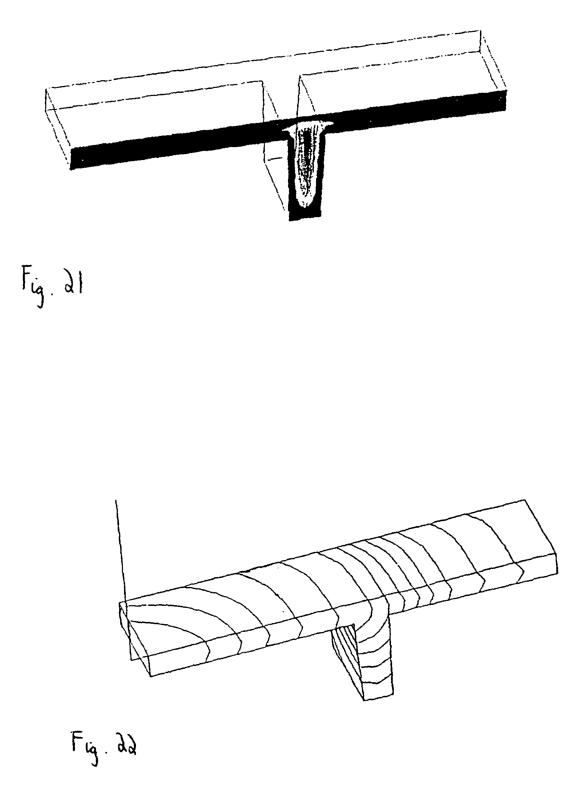

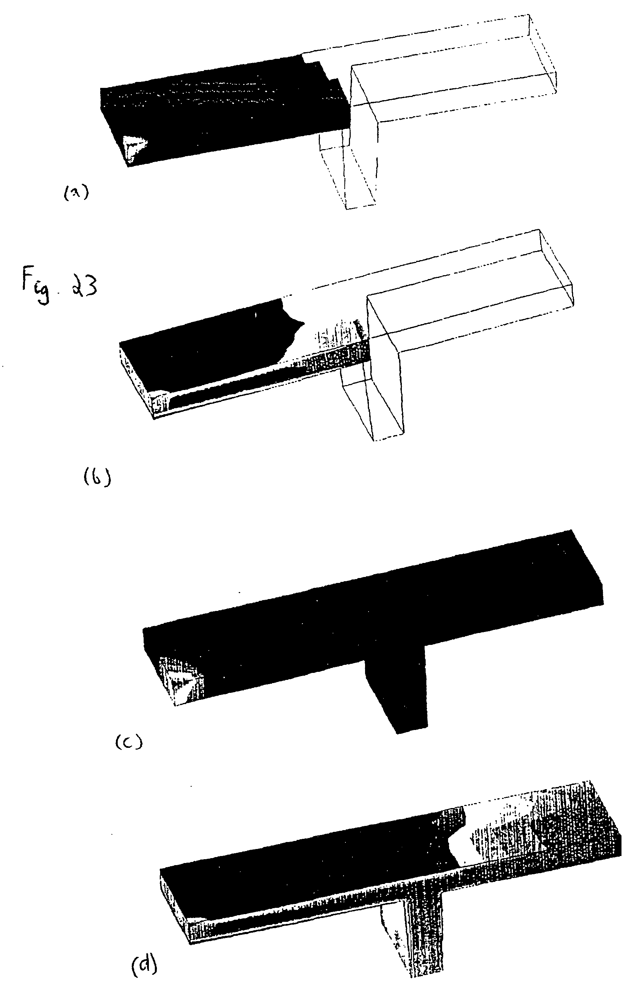

Fig 21 illustrates the derived value of the flow conductance 'κ' at the moment when the mould is filled. The lighter areas illustrate where the conduance is high, and the darker areas show where the conductance is low. Fig. 22 illustrates the position of the flow front at each number of instants. In other words, each line through the mould illustrates the position of the flow front at a receptive moment.

Fig. 23(a) illustrates the pressure in the mould at the moment when 60% of it is filled with plastic. Areas where plastic has not reached are not shaded, while the injection position, at which the pressure is a maximum, is shown in a light colour. Fig 23(b) illustrates temperatures at the same instant, with low temperatures in the area where the plastic has reached being illustrated by lighter colour. Fig 23(c) illustrates the pressure variation at the moment when the mould is 100% filled, while Fig. 23(d) illustrates the temperature throughout the mould at the corresponding moment.

(iii) Further analysis of the filling period

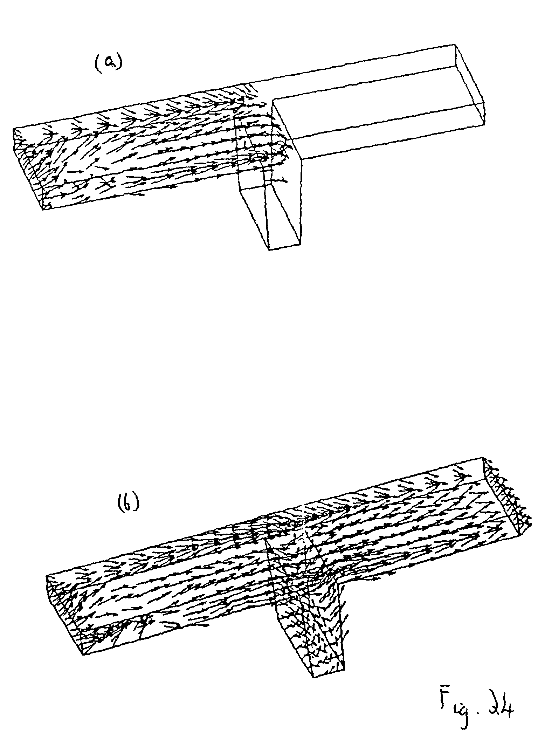

In addition to the analysis already explained at each time t during the injection process, a further analysis can be carried out at each instant of the orientation of the fibres of the plastic. This is done using the equations proposed by Advani and Tucker in Journal of Rheology, 31(8), p751-784, 1987. The results are illustrated in Fig. 24. Fig. 24(a) illustrates the fibre orientation at the moment when the mould is 60% filled, while Fig. 24(b) illustrates the fibre orientation at the moment when the mould is 100% filled.

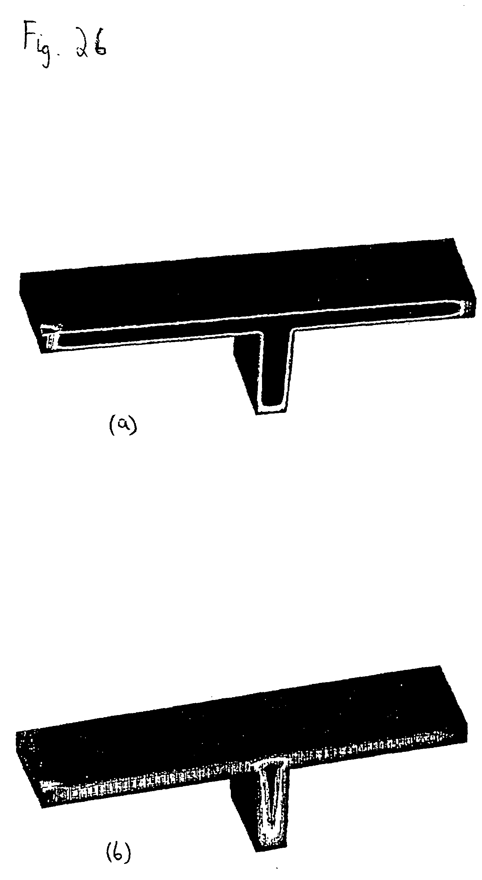

The Young's Modulus at each point in the mould can be also be calculated using the procedure of the above article, and the results derived according to the present invention. Fig. 25 illustrates the Young's Modulus in the longitudinal direction. The lighter areas are those with a high modulus, while the darker areas have a lower modulus.

(iv) Analysis of periods after filling

Attention is now given to the period after the mould has been fully filled with plastic. A known relationship exists between the specific volume, temperature, and pressure of a given plastic. A critical temperature $T_c$ exists and two different equations of state apply below and above this temperature respectively:

$$V = \frac{a_2}{P + a_1}T + \frac{a_4}{P + a_3} + a_5 \exp(a_6 T - a_7 P)$$

$$(T < Tc) \tag{10a}$$

$$V = \frac{b_2}{P + b_1}T + \frac{b_4}{P + b_3} \qquad (T > Tc) \tag{10b}$$

Analysis of the period after the mould has been filled, can optionally be performed on the basis of κ according to the invention by repeating the process shown in Figure 19, but at step 16 terminating the analysis not at the moment when the mould is filled but at some later time. Fig. 26 (a) and (b) illustrate the density, derived from equations (10a) and (10b), respectively 5 and 25 seconds after the mould has been filled. The density distribution is caused by the difference in the cooling rate, and may lead to moulding failure.

(v) Distortion in the article produced

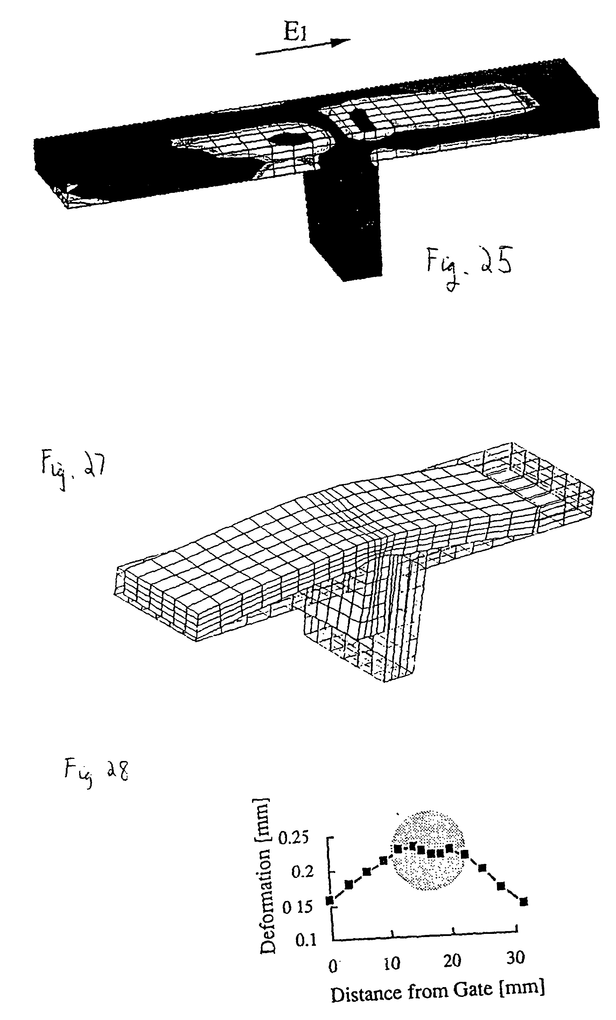

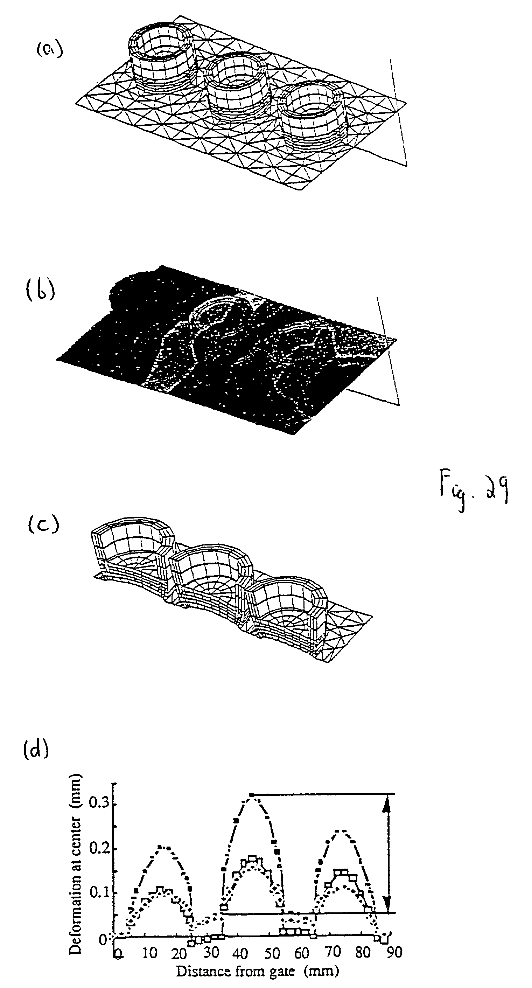

Using the fibre orientation results, the Young's Modulus results and the result of the analysis during the period after the mould is filled, an analysis is carried out by known methods of the thermal stress experienced by the injection modelled article, a 'rib part', after it is released from the mould. Fig. 27 illustrates an example of the deformation, showing the comparison between the unstressed (rectilinear) framework of the small elements used in the procedure of Fig. 19, and the distorted framework caused by stress. As shown in Fig. 28, the deformation is greatest at the centre of the rib part.

**Example 5**

A further example of the use of a method according to the invention is illustrated in Fig. 29. Fig. 29(a) shows a mould divided into small triangular elements. Flow into the mould is analysed by the procedure discussed in detail above with reference to Figs. 18 and 19. Fig. 29(b) illustrates the flow front at each of a number of instants. Fig. 29(c) and (d) show the deformation exhibited by an article produced by this process. Each of the lines in Fig. 29(d) represents the deformation in the articles produced for a respective pressure of injected plastic. The lines (from top to bottom) respectively indicate distortion if the pressure is 5MPa, 50MPa and 150MPa.

**Claims**

1. An apparatus for optimising the conditions of a process of fluid flow comprising:

   a three-dimensional model constructing means for constructing a three-dimensional model divided into a plurality of small elements to represent at least part of a cavity where fluid flows;
   a flow conductance determining means for determining a flow conductance $\kappa$ of the fluid for each small element, $\kappa$ being defined by the equations
   $U = -\kappa(\partial P/\partial x)$, $V = -\kappa(\partial P/\partial y)$, $W = -\kappa(\partial P/\partial z)$ where U, V and W are the velocities at the respective positions x, y and z of the small element, and $\kappa$ also being determined by a pre-determined equation in terms of the viscosity of the fluid and the position of the small element in the cavity, $\kappa$ being a small value if the small element is located close to the cavity wall surface, and being a larger value when the small element is located further from the cavity wall surface; and
   computing means for determining, based on said flow conductance $\kappa$,

      (a) the pressure of the fluid at said respective small elements;

      (b) the pressure transitions of the fluid at said respective small elements; or

      (c) the flow velocity of the fluid at said respective small elements.

2. An apparatus according to claim 1, in which the computing means determines the pressure of the fluid at said respective small elements.

3. An apparatus according to claim 1, in which the computing means determines the pressure transitions of the fluid at said respective small elements.

4. An apparatus according to claim 1, in which the computing means determines the flow velocity of the fluid at said respective small elements.

5. An apparatus according to any preceding claim, in which said fluid flow process is an injection molding process, and said cavity is for forming an injection molded product.

6. A method of optimising the conditions of a process of fluid flow comprising:

constructing a three-dimensional model divided into a plurality of small elements to represent at least part of a cavity where fluid flows;

determining a flow conductance $\kappa$ of the fluid for each small element, $\kappa$ being defined by the equations $U = -\kappa(\partial P/\partial x)$, $V = -\kappa(\partial P/\partial y)$, $W = -\kappa(\partial P/\partial z)$ where U, V and W are the velocities at the respective positions x, y and z of the small element, and $\kappa$ also being determined by a pre-determined equation in terms of the viscosity of the fluid and the position of the small element in the cavity, $\kappa$ being a small value if the small element is located close to the cavity wall surface, and being a larger value when the small element is located further from the cavity wall surface; and

determining, based on said flow conductance $\kappa$,

(a) the pressure of the fluid at said respective small elements;

(b) the pressure transitions of the fluid at said respective small elements; or

(c) the flow velocity of the fluid at said respective small elements.

7. A method according to claim 6, in which said determination determines the pressure of the fluid at said respective small elements.

8. A method according to claim 6, in which said determination determines the pressure transitions of the fluid at said respective small elements.

9. A method according to claim 6, in which said determination determines the flow velocity of the fluid at said respective small elements.

10. A method according to any of claims 6 to 9, in which the predetermined equation is a function $F(R, \eta)$ which increases according to the increase of the minimum distance R between the small element and the cavity wall surface, and decreases according to the increase of the viscosity $\eta$ of said fluid.

11. A method according to any of claims 6 to 9, wherein the predetermined equation is:

$$\frac{\partial^2 \kappa}{\partial x^2} + \frac{\partial^2 \kappa}{\partial y^2} + \frac{\partial^2 \kappa}{\partial z^2} = -\frac{1}{\eta}$$

where $\eta$ is the viscosity of said fluid, and x, y, and z represent the position of said small element.

12. A method according to any of claims 6 to 11, in which said process of fluid flow is an injection molding process, and said cavity is for forming an injection molded product, the method comprising analysing the injection molding process using the results of said determination.

13. A method of producing an injection molded product comprising:

determining the molding conditions of an injection molded product; and

constructing a three-dimensional model divided into a plurality of small elements to represent at least part of a cavity for forming the injection molded product;

determining a flow conductance $\kappa$ of the fluid for each small element, $\kappa$ being defined by the equations $U = -\kappa(\partial P/\partial x)$, $V = -\kappa(\partial P/\partial y)$, $W = -\kappa(\partial P/\partial z)$ where U, V and W are the velocities at the respective positions x, y and z of the small element, and $\kappa$ also being determined by a pre-determined equation in terms of the viscosity of the fluid and the position of the small element in the cavity, $\kappa$ being a small value if the small element is located close to the cavity wall surface, and being a larger value when the small element is located further from the cavity wall surface

determining, based on said flow conductance $\kappa$,

(a) the pressure of the fluid at said respective small elements;

(b) the pressure transitions of the fluid at said respective small elements; or

    (c) the flow velocity of the fluid at said respective small elements;

    deciding molding conditions based on the results of said determination; and
    producing the injection molded product based on said decided molding conditions.

**14.** A method according to claim 13, in which said determination determines the pressure of the fluid at said respective small elements.

**15.** A method according to claim 13, in which said determination determines the pressure transitions of the fluid at said respective small elements.

**16.** A method according to claim 13, in which said determination determines the flow velocity of the fluid at said respective small elements.

**17.** A method of any one of claims 13 to 16, wherein said molding conditions include any one of the shape of said injection molded product, mold configuration, injection speed, material temperature, mold temperature and injection molded material.

**Patentansprüche**

**1.** Verfahren zur Optimierung der Bedingungen eines Fluidströmungsverfahrens, umfassend:

    ein Mittel zur Konstruktion eines dreidimensionalen Modells, mit dem ein dreidimensionales Modell zu konstruieren ist, das in eine Vielzahl kleiner Elemente unterteilt ist, um zumindest Teil eines Hohlraums darzustellen, in dem Fluid strömt;
    ein Strömungsleitfähigkeits-Bestimmungsmittel zum Bestimmen der Strömungsleitfähigkeit $\kappa$ des Fluids für jedes kleine Element, wobei $\kappa$ durch folgende Gleichungen definiert ist:

$$U = -\kappa(\partial P/\partial x), \quad V = -\kappa(\partial P/\partial y), \quad W = -\kappa(\partial P/\partial z),$$

    worin U, V und W die Geschwindigkeiten an den jeweiligen Positionen x, y und z des kleinen Elements sind, und wobei $\kappa$ auch durch eine vorbestimmte Gleichung durch die Viskosität des Fluids und die Position des kleinen Elements im Hohlraum bestimmt ist, wobei $\kappa$ ein kleiner Wert ist, wenn das kleine Element nahe der Hohlraumwandfläche liegt, und ein größerer Wert ist, wenn das kleine Element weiter entfernt von der Hohlraumwandfläche liegt; und
    eine Recheneinrichtung, um auf Basis der Strömungsleitfähigkeit $\kappa$ zu bestimmen:

    (a) den Druck des Fluids in den jeweiligen kleinen Elementen;
    (b) die Druckübergänge des Fluids an den jeweiligen kleinen Elementen; oder
    (c) die Strömungsgeschwindigkeit des Fluids an den jeweiligen kleinen Elementen.

**2.** Vorrichtung nach Anspruch 1, bei der die Recheneinrichtung den Druck des Fluids an den jeweiligen kleinen Elementen bestimmt.

**3.** Vorrichtung nach Anspruch 1, bei der die Recheneinrichtung die Druckübergänge des Fluids an den jeweiligen kleinen Elementen bestimmt.

**4.** Vorrichtung nach Anspruch 1, bei der die Recheneinrichtung die Strömungsgeschwindigkeit des Fluids an den jeweiligen kleinen Elementen bestimmt.

**5.** Vorrichtung nach einem der vorangegangenen Ansprüche, bei der das Fluidströmungsverfahren ein Spritzgussverfahren ist und der Hohlraum zum Formen eines Spritzgussprodukts dient.

**6.** Verfahren zum Optimieren der Bedingungen eines Fluidströmungsverfahrens, umfassend:

    das Konstruieren eines dreidimensionalen Modells, das in eine Vielzahl kleiner Elemente unterteilt ist, um zumindest einen Teil eines Hohlraums darzustellen, in dem ein Fluid strömt;
das Bestimmen der Strömungsleitfähigkeit κ des Fluids für jedes kleine Element, wobei κ durch folgende Gleichungen definiert ist:

$$U = -\kappa(\partial P/\partial x), \quad V = -\kappa(\partial P/\partial y), \quad W = -\kappa(\partial P/\partial z),$$

worin U, V und W die Geschwindigkeiten an den jeweiligen Positionen x, y und z des kleinen Elements sind, und wobei κ auch durch eine vorbestimmte Gleichung durch die Viskosität des Fluids und die Position des kleinen Elements im Hohlraum bestimmt ist, wobei κ ein kleiner Wert ist, wenn das kleine Element nahe der Hohlraumwandfläche liegt, und ein größerer Wert ist, wenn das kleine Element weiter entfernt von der Hohlraumwandfläche liegt; und

auf Basis der Strömungsleitfähigkeit κ die Bestimmung:

(a) des Drucks des Fluids in den jeweiligen kleinen Elementen;
(b) der Druckübergänge des Fluids an den jeweiligen kleinen Elementen; oder
(c) der Strömungsgeschwindigkeit des Fluids an den jeweiligen kleinen Elementen.

7. Verfahren nach Anspruch 6, bei dem durch die Bestimmung der Druck des Fluids an den jeweiligen kleinen Elementen bestimmt wird.

8. Verfahren nach Anspruch 6, bei durch die Bestimmung die Druckübergänge des Fluids an den jeweiligen kleinen Elementen bestimmt werden.

9. Verfahren nach Anspruch 6, bei dem durch die Bestimmung die Strömungsgeschwindigkeit des Fluids an den jeweiligen kleinen Elementen bestimmt wird.

10. Verfahren nach einem der Ansprüche 6 bis 9, bei dem die vorbestimmte Gleichung eine Funktion F (R, η) ist, die mit Zunahme des Mindestabstands R zwischen dem kleinen Element und der Hohlraumwandfläche zunimmt und mit Zunahme der Viskosität η des Fluids abnimmt.

11. Verfahren nach einem der Ansprüche 6 bis 9, worin die vorbestimmte Gleichung folgende ist:

$$\frac{\partial^2 \kappa}{\partial x^2} + \frac{\partial^2 \kappa}{\partial y^2} + \frac{\partial^2 \kappa}{\partial z^2} = -\frac{1}{\eta}$$

worin η die Viskosität des Fluids ist und x, y und z die Position des kleinen Elements darstellen.

12. Verfahren nach einem der Ansprüche 6 bis 11, bei dem das Fluidströmungsverfahren ein Spritzgussverfahren ist und der Hohlraum zum Formen eines Spritzgussprodukts dient, wobei das Verfahren das Analysieren des Spritzgussverfahrens unter Einsatz der Ergebnisse der Bestimmung umfasst.

13. Verfahren zur Erzeugung eines Spritzgussprodukts, umfassend:

das Bestimmen der Formungsbedingungen des Spritzgussprodukts; und
das Konstruieren eines dreidimensionalen Modells, das in eine Vielzahl kleiner Elemente unterteilt ist, um zumindest einen Teil eines Hohlraums zum Formen des Spritzgussprodukts darzustellen;
das Bestimmen der Strömungsleitfähigkeit κ des Fluids für jedes kleine Element, wobei κ durch folgende Gleichungen definiert ist:

$$U = -\kappa(\partial P/\partial x), \quad V = -\kappa(\partial P/\partial y), \quad W = -\kappa(\partial P/\partial z),$$

worin U, V und W die Geschwindigkeiten an den jeweiligen Positionen x, y und z des kleinen Elements sind, und wobei κ auch durch eine vorbestimmte Gleichung durch die Viskosität des Fluids und die Position des kleinen Elements im Hohlraum bestimmt ist, wobei κ ein kleiner Wert ist, wenn das kleine Element nahe der Hohlraumwandfläche liegt, und ein größerer Wert ist, wenn das kleine Element weiter entfernt von der Hohlraumwandfläche liegt; und

auf Basis der Strömungsleitfähigkeit κ die Bestimmung:

(a) des Drucks des Fluids in den jeweiligen kleinen Elementen;
(b) der Druckübergänge des Fluids an den jeweiligen kleinen Elementen; oder
(c) der Strömungsgeschwindigkeit des Fluids an den jeweiligen kleinen Elementen;

das Festlegen der Formungsbedingungen auf Basis der Ergebnisse der Bestimmung, und
das Erzeugen des Spritzgussprodukts auf Basis der festgelegten Formungsbedingungen.

**14.** Verfahren nach Anspruch 13, bei dem durch die Bestimmung der Druck des Fluids an den jeweiligen kleinen Elementen bestimmt wird.

**15.** Verfahren nach Anspruch 13, bei dem durch die Bestimmung die Druckübergänge des Fluids an den jeweiligen kleinen Elementen bestimmt werden.

**16.** Verfahren nach Anspruch 13, bei dem durch die Bestimmung die Strömungsgeschwindigkeit des Fluids an den jeweiligen kleinen Elementen bestimmt wird.

**17.** Verfahren nach einem der Ansprüche 13 bis 16, worin die Formungsbedingungen beliebige aus der Form des Spritzgussprodukts, der Form-Konfiguration, der Einspritzgeschwindigkeit, der Materialtemperatur, der Formtemperatur und des Spritzgussmaterials umfasst.

**Revendications**

**1.** Un appareil pour optimiser les conditions d'un processus d'écoulement d'un fluide comprenant :

des moyens de construction de modèle tridimensionnel pour construire un modèle tridimensionnel divisé en une pluralité de petits éléments pour représenter au moins une partie d'une cavité où s'écoule un fluide ;
des moyens de détermination de conductance d'écoulement pour déterminer une conductance d'écoulement κ du fluide pour chaque petit élément, κ étant défini par les relations

$$U = -\kappa(\partial P/\partial x), \quad V = -\kappa(\partial P/\partial y), \quad W = -\kappa(\partial P/\partial z) \text{ où}$$

U, V et W sont les vitesses au niveau des positions respectives x, y et z du petit élément, κ étant également déterminé par une relation prédéterminée en termes de la viscosité du fluide et de la position du petit élément dans la cavité, κ étant une petite valeur si le petit élément est situé près de la surface de paroi de la cavité et étant une plus grande valeur lorsque le petit élément est situé plus loin de la surface de paroi de la cavité ; et
des moyens de calcul pour déterminer, sur la base de
ladite conductance d'écoulement κ,

(a) la présence du fluide au niveau desdits petits éléments respectifs ;

(b) les transitions de pression du fluide au niveau desdits petits éléments respectifs ; ou

(c) la vitesse d'écoulement du fluide au niveau desdits petits éléments respectifs.

**2.** Un appareil selon la revendication 1, dans lequel les moyens de calcul déterminent la pression du fluide au niveau desdits petits éléments respectifs.

**3.** Un appareil selon la revendication 1, dans lequel les moyens de calcul déterminent les transitions de pression du fluide au niveau desdits petits éléments respectifs.

**4.** Un appareil selon la revendication 1, dans lequel les moyens de calcul déterminent la vitesse d'écoulement du fluide au niveau desdits petits éléments respectifs.

**5.** Un appareil selon une quelconque revendication précédente, dans leque ledit processus d'écoulement d'un fluide est un processus de moulage par injection, et dans lequel ladite cavité est prévue pour constituer un produit moulé par injection.

**6.** Un procédé pour optimiser les conditions d'un processus d'écoulement d'un fluide comprenant les étapes consistant à :

construire un modèle tridimensionnel divisé en une pluralité de petits éléments pour représenter au moins une partie d'une cavité où s'écoule un fluide ;
déterminer une conductance d'écoulement κ du fluide pour chaque petit élément, κ étant défini par les relations

$$U = -\kappa(\partial P/\partial x), V = -\kappa(\partial P/\partial y), W = -\kappa(\partial P/\partial z) \text{ où}$$

U, V et W sont les vitesses au niveau des positions respectives x, y et z du petit élément, κ étant également déterminé par une relation prédéterminée en termes de la viscosité du fluide et de la position du petit élément dans la cavité, κ étant une petite valeur si le petit élément est situé près de la surface de paroi de la cavité et étant une plus grande valeur lorsque le petit élément est situé plus loin de la surface de paroi de la cavité ; et déterminer, sur la base de ladite conductance d'écoulement κ,

(a) la pression du fluide au niveau desdits petits éléments respectifs ;

(b) les transitions de pression du fluide au niveau desdits petits éléments respectifs ; ou

(c) la vitesse d'écoulement du fluide au niveau desdits petits éléments respectifs.

**7.** Un procédé selon la revendication 6, dans lequel ladite détermination détermine la pression du fluide au niveau desdits petits éléments respectifs.

**8.** Un procédé selon la revendication 6, dans lequel ladite détermination détermine les transitions de pression du fluide au niveau des petits éléments respectifs.

**9.** Un procédé selon la revendication 6, dans lequel ladite détermination détermine la vitesse d'écoulement du fluide au niveau desdits petits éléments respectifs.

**10.** Un procédé selon l'une quelconque des revendications 6 à 9, dans lequel ladite relation prédéterminée est une fonction F(R, n) qui augmente conformément à l'augmentation de la distance minimum R entre le petit élément et la surface de paroi de la cavité et diminue conformément à l'augmentation de la viscosité η dudit fluide.

**11.** Un procédé selon l'une quelconque des revendications 6 à 9, dans lequel la relation prédéterminée est où η est la viscosité dudit fluide, et x, y et z représentent la position dudit petit élément.

**12.** Un procédé selon l'une quelconque des revendications 6 à 11, dans lequel ledit processus d'écoulement d'un fluide est un processus de moulage par injection, et dans lequel ladite cavité est prévue pour constituer un produit moulé par injection, le procédé comprenant l'analyse du processus de moulage par injection en utilisant les résultats de ladite détermination.

**13.** Un procédé de réalisation d'un produit moulé par injection comprenant les étapes consistant à :

déterminer les conditions de moulage d'un produit moulé par injection ; et
construire un modèle tridimensionnel divisé en une pluralité de petits éléments pour représenter au moins une partie d'une cavité pour constituer un produit moulé par injection ;
déterminer une conductance d'écoulement κ du fluide pour chaque petit élément, κ étant défini par les relations

$$U = -\kappa(\partial P/\partial x), V = -\kappa(\partial P/\partial y), W = -\kappa(\partial P/\partial z) \text{ où}$$

U, V et W sont les vitesses au niveau des positions respectives x, y et z du petit élément, κ étant également déterminé par une relation prédéterminée en termes de la viscosité du fluide et de la position du petit élément dans la cavité, κ étant une faible valeur si le petit élément est situé près de la surface de paroi de la cavité et étant une plus grande valeur lorsque le petit élément est situé plus loin de la surface de paroi de la cavité déterminer, sur la base de ladite conductance d'écoulement κ,

(a) la pression du fluide au niveau desdits petits éléments respectifs ;

(b) les transitions de pression du fluide au niveau desdits petits éléments respectifs ; ou

(c) la vitesse d'écoulement du fluide au niveau desdits petits éléments respectifs ;

décider des conditions de moulage sur la base des résultats de ladite détermination ; et
réaliser le produit moulé par injection sur la base desdites conditions de moulage décidé

14. Un procédé selon la revendication 13, dans lequel ladite détermination détermine la pression du fluide au niveau desdits petits éléments respectifs.

15. Un procédé selon la revendication 13, dans lequel ladite détermination détermine les transitions de pression du fluide au niveau desdits petits éléments respectifs.

16. Un procédé selon la revendication 13, dans lequel ladite détermination détermine la vitesse d'écoulement du fluide au niveau desdits petits éléments respectifs.

17. Un procédé selon l'une quelconque des revendications 13 à 16, dans lequel lesdites conditions de moulage comprennent l'une quelconque parmi la forme dudit produit moulé par injection, la configuration du moule, la vitesse d'injection, la température de la matière, la température du moule et la matière moulée par injection.

Fig. 1

Fig. 2

```
                    ╭──────────────────────╮
                    │        Start         │
                    ╰──────────────────────╯
                              │
            ┌─────────────────┤
            │     ╱───────────────────────────╱
            │    ╱   Enter the injection      ╱
            │   ╱    molding conditions      ╱
            │  ╱───────────────────────────╱
            │                               ⌐Step 1
            │            │
            │   ┌─────────────────────────┐
            │   │  Divide the model into  │
            │   │     small elements      │  Step 2
            │   └─────────────────────────┘
            │            │
            │   ┌─────────────────────────────────┐
            │   │ Determine the flow conductances │
            │   │ x at the respective small       │
            │   │ elements                        │  Step 3
            │   └─────────────────────────────────┘
            │            │
            │   ┌─────────────────────────────────┐
            │   │  Find pressure, pressure        │
            │   │  transitions or flow velocities │
            │   │  at the respective small        │  Step 4
            │   │  elements                       │
            │   └─────────────────────────────────┘
            │            │
            │   ┌─────────────────────────┐
            │   │  Display the results     │  Step 5
            │   │  of the analysis         │
            │   └─────────────────────────┘
            │            │
            │         ╱────────────╲
            │        ╱ Is any       ╲        NO
            │       ╱  molding        ╲─────────────┐
            │       ╲  failure liable ╱             │
            │        ╲ to occur?     ╱              │
            │         ╲──────────────╱  Step 6      │
            │            │                          │
            │           YES                         │
            │   ┌─────────────────────┐   ┌──────────────────┐
            └───│ Modify the injection│   │  Perform the     │
                │ molding conditions  │   │  injection       │
                └─────────────────────┘   │  molding         │
              Step 7                       └──────────────────┘
                                          Step 8
                                              │
                                      ╭──────────────╮
                                      │     End      │
                                      ╰──────────────╯
```

Fig. 3

Fig. 4

Fig. 5

Fig. 6

<u>1 3</u>

1 4

Fig. 7

1 5

1 6

$\kappa = 0.005 [mm^2/Pa/sec]$

0.010

0.015

Fig. 8

2 1

2 2

G

$P = 9.3 [MPa]$

7.9

6.5

5.1

3.7

2.3

0.9

0.2

G : Gate

Fig. 9

G

G : Gate

Pressure transition =0.2[MPa/sec]

Fig. 10

G

G : Gate

Fig. 11

1 7

Fig. 12

$\kappa = 0.005[mm^2/Pa/sec]$

0.010

0.015

Fig. 13

$\kappa = 0.005[mm^2/Pa/sec]$

0.010

0.015

Fig. 14

G

P=9.3[MPa]   7.9   6.5   5.1   3.7   2.3   0.9   0.2

G : Gate

25

Fig. 15

G : Gate

Pressure transition =0.2[MPa/sec]

Fig. 16

G : Gate

Fig. 17

Fig. 18

START

ENTER INJECTION MOULDING CONDITIONS — STEP 1

DIVIDE THE MODEL INTO SMALL ELEMENTS — STEP 2

ANALYSE INJECTION MOULDING PROCESS — STEP 3

DISPLAY THE RESULTS OF ANALYSIS — STEP 4

STEP 5

IS ANY MOULDING FAILURE LIABLE TO OCCUR?

NO

STEP 7

PERFORM INJECTION MOULDING

END

STEP 6

YES

MODIFY THE INJECTION MOULDING CONDITIONS

Fig. 19

STEP 9 — SET TIME $t = \underline{1}$

STEP 10 — FIND THE POSITION OF THE FLOW FRONT AT TIME $t$

STEP 11 — GIVE INITIAL DISTRIBUTION OF VISCOSITY $\eta$ AT TIME $t$

STEP 12 — FIND THE DISTRIBUTION OF $K$ AT TIME $t$, USING THE DISTRIBUTION OF VISCOSITY $\eta$

STEP 13 — FIND $P$, $T$ AND DISTRIBUTION OF FLOW RATE AT TIME $t$, USING $K$

STEP 14 — ARE $P$ AND $T$ CONVERGED?

STEP 15 — CORRECT $\eta$, USING $P$, $T$ AND THE FLOW DISTRIBUTION

STEP 16 — IS THE MOLD FILLED?

STEP 17 — SET $t \rightarrow t+1$

STEP 3

YES   NO   YES

Fig. 20

1

Fig. 21

Fig. 22

Fig. 23

(a)

(b)

(c)

(d)

(a)

(b)

Fig. 24

Fig. 26

(a)

(b)

$E_1$

Fig. 25

Fig. 27

Fig 28

(a)

(b)

Fig. 29

(c)

(d)